# DEMANDE DE BREVET EUROPEEN

(11) **EP 3 822 237 A1**
(43) Date de publication de la demande: **19.05.2021**
(21) Numéro de dépôt: 20209891.9
(22) Date de dépôt: 01.02.2016
(51) Int. Cl.: C03C 25/34, C09J 161/04

(54) **COMPOSITION D'ENCOLLAGE POUR LAINE MINERALE A BASE DE LIGNOSULFONATE ET D'UN COMPOSE CARBONYLE, ET PRODUITS ISOLANTS OBTENUS**

(30) Priorité: 30.01.2015 FR 1550721; 30.01.2015 FR 1550723
(62) Demande divisionnaire de: 16707856.7
(71) Demandeur: SAINT-GOBAIN ISOVER, 92400 Courbevoie (FR); Institut National de la Recherche Agronomique, 75338 Paris Cedex 07 (FR)
(72) Inventeur: ALLAIS, Florent, 51400 BOUY (FR); DUCROT, Paul-Henri, 91430 IGNY (FR); BROUSSARD, Orianne, 91400 ORSAY (FR); PETIT, Morgane, 75007 PARIS (FR); SILIOC, Christelle, 69970 CHAPONNAY (FR)
(74) Mandataire: Saint-Gobain Recherche

(57) **Abrégé**

La présente invention se rapporte à une composition d'encollage pour des produits isolants à base de laine minérale, notamment de verre ou de roche, qui comprend
- au moins un lignosulfonate d'ammonium ou de sel de métal alcalin ou alcalino-terreux d'acide lignosulfonique, et
- au moins un composé carbonylé de formule

R - [C(O)R₁]ₓ (I)

dans laquelle :
- R représente un radical hydrocarboné, linéaire, ramifié ou cyclique, saturé ou insaturé, un radical renfermant un ou plusieurs noyaux aromatiques constitués de 5 ou 6 atomes de carbone, un radical renfermant un ou plusieurs hétérocycles aromatiques contenant 4 ou 5 atomes de carbone et un atome d'oxygène, d'azote ou de soufre, le radical R pouvant contenir d'autres groupements fonctionnels, notamment hydroxyle ou alkoxy, en particulier méthoxy,
- R₁ représente un atome d'hydrogène ou un radical alkyle en C₁-C₁₀, et
- x varie 1 à 10,

ladite composition d'encollages étant exempte de formaldéhyde, et ladite composition d'encollage étant exempte de sucre hydrogéné et de mélamine.

## Description

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler pour former ledit liant organique qui renferme au moins un lignosulfonate et au moins un composé carbonylé, ainsi que les produits d'isolation qui en résultent.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe. Notamment, la centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Les résols sont généralement obtenus par réaction d'un phénol et d'un aldéhyde dans des conditions basiques, dont une certaine proportion de ces composés qui n'ont pas réagi se retrouve dans la résine finale. L'aldéhyde le plus utilisé est le formaldéhyde dont la présence sous forme de formaldéhyde libre n'est pas souhaitée à cause de ses effets nocifs avérés.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde, que ce soit au niveau de la fabrication des produits d'isolation ou de leur utilisation.

Des solutions de remplacement des résols dans les compositions d'encollage sont connues et se fondent sur l'emploi d'un polymère d'acide carboxylique et d'un composé hydroxylé.

Dans US 5340868, l'encollage comprend un polymère polycarboxylique, un β-hydroxylamide et un acide carboxylique monomérique au moins trifonctionnel.

On connaît aussi des compositions d'encollage qui comprennent un polymère polycarboxylique, un polyol et un catalyseur, lequel catalyseur est un catalyseur contenant du phosphore (US 5 318 990, US 5661 213, US 6331 350, US 2003/0008978), un fluoroborate (US 5 977 232) ou bien un cyanamide, un dicyanamide ou une cyanoguanidine (US 5 932 689).

On connaît également des compositions d'encollage comprenant une alcanolamine renfermant au moins deux groupements hydroxyle et un polymère polycarboxylique (US 6 071 994, US 6 099 773, US 6 146 746, US 2002/0091185) associé à un copolymère (US 6 299 936).

Il a aussi été proposé de remplacer tout ou partie du composé hydroxylé par un saccharide.

Dans US 2005/0215153, il est décrit un encollage formé à partir d'un pré-liant contenant polymère d'acide carboxylique et d'un polyol, et d'une dextrine en tant que co-liant.

Par ailleurs, on connaît des compositions adhésives à base de saccharides utilisables en tant qu'encollages pour de la laine minérale. Dans US 5 895 804, la composition comprend un polymère polycarboxylique ayant au moins deux groupes fonctionnels acide carboxylique et un poids moléculaire au moins égal à 1000, et un polysaccharide ayant un poids moléculaire au moins égal à 10000. Dans WO 2009/080938, la composition d'encollage comprend un monosaccharide et/ou un polysaccharide et un acide organique polycarboxylique de masse molaire inférieure à 1000, éventuellement en association avec un catalyseur permettant d'ajuster la température de début de réticulation.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

Enfin, WO 2012/172262 divulgue une composition d'encollage pour laine minérale qui comprend un sel d'acide lignosulfonique, un oligosaccharide et un catalyseur de réticulation.

La présente invention a pour but de proposer une alternative aux compositions d'encollage pour des produits isolants à base de laine minérale, qui ne contient pas de formaldéhyde, et qui présente des propriétés physico-chimiques améliorées par rapport à celles décrites dans WO 2012/172262.

Ce but est atteint selon l'invention par la composition d'encollage pour des produits isolants à base de laine minérale, notamment de verre ou de roche, qui comprend
- au moins un lignosulfonate d'ammonium ou un sel de métal alcalin ou alcalino-terreux d'acide lignosulfonique, et
- au moins un composé carbonylé de formule

   R - [C(O)R₁]ₓ (I)

   dans laquelle :
   - R représente un radical hydrocarboné, linéaire, ramifié ou cyclique, saturé ou insaturé, un radical renfermant un ou plusieurs noyaux aromatiques constitués de 5 ou 6 atomes de carbone, un radical renfermant un ou plusieurs hétérocycles aromatiques contenant 4 ou 5 atomes de carbone et un atome d'oxygène, d'azote ou de soufre, le radical R pouvant contenir d'autres groupements fonctionnels, notamment hydroxyle ou alkoxy, en particulier méthoxy,
   - R₁ représente un atome d'hydrogène ou un radical alkyle en C₁-C₁₀, et
   - x varie 1 à 10.

De préférence, la composition d'encollage est exempte de sucre hydrogéné et de mélamine.

Le lignosulfonate d'ammonium est un sous-produit issu du traitement du bois pour la fabrication de la pâte à papier selon le procédé dit « au sulfite ». Le traitement de la pâte à papier par du sulfite d'ammonium ou du bisulfite d'ammonium permet d'obtenir des lignosulfonates d'ammonium.

Le lignosulfonate d'ammonium permet en outre de conférer au liant une bonne résistance au feu.

Les sels de métal alcalin ou alcalino-terreux d'acide lignosulfonique sont généralement des mélanges complexes de plusieurs acides lignosulfoniques sous forme salifiée, communément dénommés « lignosulfonates ». Les lignosulfonates sont des sous-produits issus du traitement du bois pour la fabrication de la pâte à papier selon le procédé « au sulfite » mentionné plus haut qui met en œuvre un sulfite ou un bisulfite. Selon la nature du contre-ion du sulfite ou du bisulfite employé, on obtient notamment des sels de métal alcalin ou alcalino-terreux d'acide lignosulfonique. Dans la présente invention, les sels de métal alcalin d'acide lignosulfonique préférés sont les lignosulfonates de sodium ou de potassium, avantageusement de sodium, et les sels de métal alcalino-terreux d'acide lignosulfonique préférés sont les lignosulfonates de magnésium ou de calcium.

Le composé carbonylé préféré est un aldéhyde répondant à la formule (I) dans laquelle le radical R₁ représente un atome d'hydrogène et x est au plus égal à 6.

La fonction carbonyle de l'aldéhyde peut dans ce cas se présenter sous la forme d'un acétal ou d'un hémiacétal de formule (II) suivante : 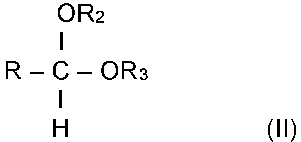 dans laquelle
R₂ représente un radical alkyle en C₁-C₁₀, et
R₃ représente un atome d'hydrogène ou un radical alkyle en C₁-C₁₀.

De manière encore plus préférée, le composé carbonylé de formule (I) est un aldéhyde monofonctionnel ou polyfonctionnel choisi dans le groupe constitué par l'acétaldéhyde, le propionaldéhyde, le diméthoxyéthanal, le butyraldéhyde, notamment n-butyraldéhyde, le glyoxal, le malonaldéhyde, le succinaldéhyde, le glutaraldéhyde, le 2-hydroxyglutaraldéhyde, le 3-méthylglutaraldéhyde, l'adipaldéhyde, le subéraldéhyde, le sébacaldéhyde, le maléaldéhyde, le fumaraldéhyde, les poly(acroléines), l'amidon dialdéhyde, le furfural (2-furancarboxyaldéhyde), le 5-méthylfurfural (2-méthyl-5-furancarboxyaldéhyde), l'hydroxyméthylfurfural (2-hydroxyméthyl-5-furancarboxyaldéhyde), le 2,5-furancarboxydialdéhyde, la vaniline et les polymères de vaniline, notamment la bis-vaniline, le cinnamaldéhyde et les polymères de cinnamaldéhyde, le phtalaldéhyde, l'isophtalaldéhyde, le téréphtalaldéhyde et les oligomères de formule (III) et (IV) suivantes : 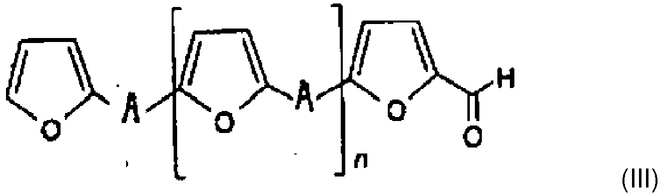 dans laquelle :
A représente un radical divalent -CH₂-, -CH(OH)- ou -CH₂-O-CH₂-,
n varie de 1 à 8, 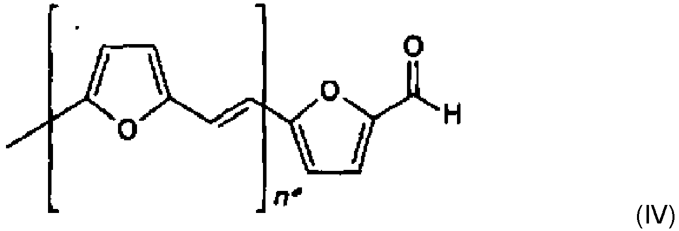 dans laquelle n' varie de 1 à 9.

L'hydroxyméthylfurfural est particulièrement préféré.

Dans la composition d'encollage, le lignosulfonate d'ammonium ou le sel de métal alcalin ou alcalino-terreux d'acide lignosulfonique représente généralement 10 à 95 % du poids du mélange constitué par le lignosulfonate d'ammonium ou le sel de métal alcalin ou alcalino-terreux d'acide lignosulfonique et le composé carbonylé de formule (I), de préférence 20 à 80 %, avantageusement 30 à 70 % et mieux encore 40 à 60 %.

Lorsque la composition d'encollage contient un lignosulfonate d'ammonium, elle peut comprendre en outre au moins un composé choisi parmi les composés contenant du phosphore et le sulfate d'ammonium.

A titre d'exemples, on peut citer les sels d'hypophosphite de métal alcalin, les phosphites de métal alcalin, les polyphosphates de métal alcalin, les hydrogénophosphates de métal alcalin, les acides phosphoriques et les acides alkylphosphoniques, dans lesquels le métal alcalin est de préférence le sodium ou le potassium ; les phosphates d'ammonium, notamment le phosphate diammonique ; et le sulfate d'ammonium.

Le composé contenant du phosphore et le sulfate d'ammonium peuvent être ajoutés dans la composition d'encollage à raison d'au plus 20 parts en poids pour 100 parts en poids de lignosulfonate d'ammonium et de composé carbonylé de formule (I), de préférence au plus 15 parts, et avantageusement au plus 10 parts.

La composition d'encollage conforme à l'invention peut encore comprendre les additifs conventionnels ci-après dans les proportions suivantes calculées sur la base de 100 parts en poids de lignosulfonate d'ammonium ou de sel de métal alcalin ou alcalino-terreux d'acide lignosulfonique et de composé carbonylé de formule (I) :
- 0 à 5 parts de silane, en particulier un aminosilane,
- 0 à 20 parts d'huile, de préférence 4 à 15 parts,
- 0 à 30 parts de glycérol, de préférence 0 à 20 parts,
- 0 à 5 parts d'un silicone,
- 0 à 40 parts d'un phosphate organique, de préférence 0 à 30 parts.
- 0 à 20 parts d'un extendeur, en particulier des hydrates de carbone tels qu'une mélasse ou une dextrine, et des protéines animales ou végétales, notamment de soja.

Lorsque la composition d'encollage contient un lignosulfonate d'ammonium, celle-ci peut renfermer en outre de l'urée et/ou un composé renfermant de l'azote dans une proportion importante, tel qu'une résine mélamine et le dicyandiamide. La quantité d'urée représente jusqu'à 30 parts en poids pour 100 parts en poids de lignosulfonate d'ammonium et de composé carbonylé de formule (I), et de préférence jusqu'à 20 parts. La quantité de composé renfermant de l'azote représente jusqu'à 40 parts en poids pour 100 parts en poids de lignosulfonate d'ammonium et de composé carbonylé de formule (I), et de préférence jusqu'à 30 parts.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée et le glycérol jouent le rôle de plastifiants et permettent d'éviter la prégélification de la composition d'encollage ; le silicone est un agent hydrophobe qui a pour fonction de réduire l'absorption d'eau par le produit d'isolation ; le phosphate organique et le composé azoté jouent le rôle d'agent anti-feu.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, avantageusement supérieure ou égale à 140°C et mieux encore au plus égale à 300°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure sur les compositions d'encollage :
- le pH, à une teneur en matières solides égale à 30 %,
- la viscosité, en mPa.s, à une teneur en matières solides égale à 30 %, au moyen d'un rhéomètre de type rotationnel plan-plan à un cisaillement de 100 s⁻¹, à 25°C et 50°C,
- l'angle de contact, sur une plaque de verre CM210 à une teneur en matières solides égale à 30 %,
- la température de début de réticulation (T_{R}) et la vitesse de réticulation (V) par la méthode Dynamic Mechnical Analysis (DMA) qui permettent de caractériser le comportement viscoélastique d'un matériau polymérique. On procède comme suit : un échantillon de papier Whatmann est imprégné de la composition d'encollage (teneur en matières solides de l'ordre de 30 %), puis il est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E. L'échantillon est chauffé à une température variant de 20 à 250°C à la vitesse de 4°C/min. A partir des mesures, on établit la courbe de variation du module d'élasticité E (en MPa) en fonction de la température (en °C) dont l'allure générale est donnée dans la figure 1. On détermine sur la courbe les valeurs correspondant à la température de début de réticulation (T_{R}), en °C, et la pente correspondant à la vitesse de réticulation (V), en MPa/°C,
- la perte de masse par analyse thermogravimétrique (ATG). La composition d'encollage est déposée dans une coupelle en aluminium, chauffée à 110°C pendant 60 minutes, puis à 190°C pendant 10 minutes. On prélève 10 mg du résidu restant dans la coupelle que l'on dépose dans un creuset en alumine. Le creuset est placé dans un appareil qui enregistre en continu la variation de masse en fonction du temps pour un cycle de température allant de 25 à 700°C à la vitesse de 10°/min. Sur la courbe enregistrée, on détermine la perte de masse à 200, 300 et 400°C.

### EXEMPLES 1 A 9

On prépare des compositions d'encollage comprenant les constituants figurant dans le tableau 1 (en parts pondérales). La composition d'encollage de référence (notée Réf.) est représentative de l'état de la technique décrit dans WO 2012/172262.

Les compositions d'encollage sont préparées en ajoutant le lignosulfonate dans un récipient contenant de l'eau sous agitation jusqu'à dissolution complète, puis en introduisant successivement les autres composés sous agitation vigoureuse jusqu'à l'obtention d'une émulsion stable.

La teneur en matières solides des compositions d'encollage est égale à 30 %.

Les résultats sont donnés dans le tableau 1.

Les exemples 1 à 9 selon l'invention présentent un angle de contact plus faible que la Référence, ce qui se traduit par un meilleur mouillage des fibres de verre.

A quantité de lignosulfonate d'ammonium identique, l'exemple 2 présente une vitesse de début de réticulation plus élevée que la Référence.

L'exemple 1 dont la quantité de lignosulfonate d'ammonium est plus élevée que la Référence présente une température de début de réticulation plus faible que la Référence et une vitesse de début de réticulation identique.

Les exemples 5, 6, 8 et 9 présentent une température de début de réticulation plus faible que la Référence.

Le lignosulfonate de calcium (exemples 8 et 9) permet en outre d'obtenir une vitesse de début de réticulation plus élevée que la Référence.

**Tableau 1**

| | Ex. 1 | Ex. 2 | Ex. 3 | Ex. 4 | Ex. 5 | Ex.6 | Ex.7 | Ex.8 | Ex. 9 | Réf. |
|---|---|---|---|---|---|---|---|---|---|---|
| **Composition d'encollage** | | | | | | | | | | |
| Lignosulfonate d'ammonium⁽¹⁾ | 80 | 60 | - | - | - | - | - | - | - | 60 |
| Lignosulfonate de sodiuM⁽²⁾ | - | - | 95 | - | - | 80 | - | - | - | |
| Lignosulfonate de magnésium⁽³⁾ | - | - | - | 95 | - | - | 80 | - | - | |
| Lignosulfonate de calcium⁽⁴⁾ | -20 | -40 | - | - | 95 | - | - | 80 | 60 | |
| Hydroxyméthylfurfural | - | - | 5 | 5 | 5 | 20 | 20 | 20 | 40 | |
| Glucose | - | - | - | - | - | - | - | - | - | 40 |
| Phosphate diammonique | | | - | - | - | - | - | - | - | 5 |

| **Propriétés** | | | | | | | | | | |
|---|---|---|---|---|---|---|---|---|---|---|
| pH | 4,9 | 4,7 | 7,8 | 3,4 | 4,8 | 7,1 | 3,2 | 4,7 | 4,8 | 6,4 |
| Vicosité (mPa.s) | | | | | | | | | | |
| - à 25°C | 3,8 | 3,6 | 5,4 | 3,1 | 3,9 | 2,9 | 2,2 | 2,9 | 4,1 | 3,8 |
| - à 50°C | 2,4 | 1,8 | 2,9 | 1,7 | 2,1 | 1,9 | 1,4 | 2,0 | 2,0 | 2,3 |
| Angle de contact (°) | 16 | 9 | 19 | 19 | 18 | 18 | 13 | 16 | 11 | 24 |
| Température début réticulation T_{R} (°C) | 106 | 108 | 158 | n. d. | 128 | 115 | n. d. | 108 | 113 | 140 |
| Vitesse début réticulation V (MPa/°C) | 8 | 18 | 7 | n. d. | 5,3 | 8,2 | n. d. | 11 | 19 | 8 |
| Perte de masse (%) | | | | | | | | | | |
| - à 200°C | 3 | 4 | 3 | 4 | 3 | 3 | 4 | 3 | 4 | 2 |
| - à 300°C | 19 | 15 | 16 | 16 | 20 | 15 | 13 | 17 | 15 | 16 |
| - à 400°C | 34 | 29 | 30 | 36 | 34 | 30 | 33 | 30 | 25 | 26 |

| | | | | | | | | | | |
|---|---|---|---|---|---|---|---|---|---|---|
| ⁽¹⁾ T11N5 commercialisé par la société Tembec ⁽²⁾ Arbo N18 commercialisé par la société Tembec ⁽³⁾ Arbo MGLS commercialisé par la société Tembec ⁽⁴⁾ C12 commercialisé par la société Tembec | | | | | | | | | | |

## Revendications

1. Composition d'encollage pour des produits isolants à base de laine minérale, notamment de roche ou de verre, **caractérisée en ce qu'**elle comprend
- au moins un lignosulfonate d'ammonium ou un sel de métal alcalin ou alcalino-terreux d'acide lignosulfonique, et
- au moins un composé carbonylé de formule
R - [C(O)R₁]ₓ (I)
dans laquelle :
- R représente un radical hydrocarboné, linéaire, ramifié ou cyclique, saturé ou insaturé, un radical renfermant un ou plusieurs noyaux aromatiques constitués de 5 ou 6 atomes de carbone, un radical renfermant un ou plusieurs hétérocycles aromatiques contenant 4 ou 5 atomes de carbone et un atome d'oxygène, d'azote ou de soufre, le radical R pouvant contenir d'autres groupements fonctionnels, notamment hydroxyle ou alkoxy, en particulier méthoxy,
- R₁ représente un atome d'hydrogène ou un radical alkyle en C₁-C₁₀, et
- x varie 1 à 10,
ladite composition d'encollages étant exempte de formaldéhyde, et
ladite composition d'encollage étant exempte de sucre hydrogéné et de mélamine.

2. Composition selon la revendication 1, **caractérisée en ce que** R₁ représente un atome d'hydrogène et x est au plus égal à 6.

3. Composition selon la revendication 1 ou 2, **caractérisée en ce que** la fonction carbonyle se présente sous la forme d'un acétal ou d'un hémiacétal de formule (II) suivante : 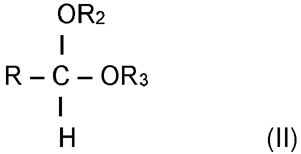 dans laquelle
R₂ représente un radical alkyle en C₁-C₁₀, et
R₃ représente un atome d'hydrogène ou un radical alkyle en C₁-C₁₀.

4. Composition selon la revendication 2 ou 3, **caractérisée en ce que** le composé carbonylé est choisi dans le groupe constitué par l'acétaldéhyde, le propionaldéhyde, le diméthoxyéthanal, le butyraldéhyde, notamment n-butyraldéhyde, le glyoxal, le malonaldéhyde, le succinaldéhyde, le glutaraldéhyde, le 2-hydroxyglutaraldéhyde, le 3-méthylglutaraldéhyde, l'adipaldéhyde, le subéraldéhyde, le sébacaldéhyde, le maléaldéhyde, le fumaraldéhyde, les poly(acroléines), l'amidon dialdéhyde, le furfural (2-furancarboxyaldéhyde), le 5-méthylfurfural (2-méthyl-5-furancarboxyaldéhyde), l'hydroxyméthylfurfural (2-hydroxyméthyl-5-furancarboxyaldéhyde), le 2,5-furancarboxydialdéhyde, la vaniline et les polymères de vaniline, notamment la bis-vaniline, le cinnamaldéhyde et les polymères de cinnamaldéhyde, le phtalaldéhyde, l'isophtalaldéhyde, le téréphtalaldéhyde et les oligomères de formule (III) et (IV) suivantes : 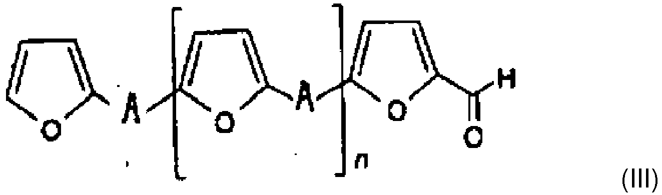 dans laquelle :
A représente un radical divalent -CH₂-, -CH(OH)- ou -CH₂-O-CH₂-,
n varie de 1 à 8, 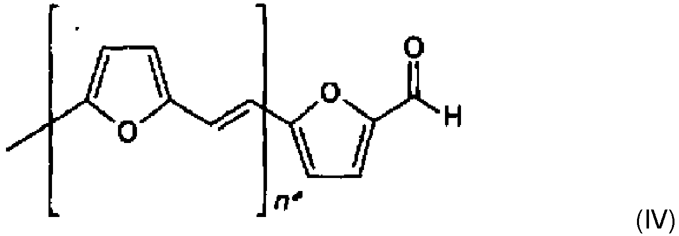 dans laquelle n' varie de 1 à 9.

5. Composition selon l'une des revendications 1 à 4, **caractérisée en ce que** le lignosulfonate d'ammonium ou le sel de métal alcalin ou alcalino-terreux d'acide lignosulfonique représente 10 à 95 % du poids du mélange constitué par le lignosulfonate d'ammonium ou le sel de métal alcalin ou alcalino-terreux d'acide lignosulfonique et le composé carbonylé de formule (I), de préférence 20 à 80 %, avantageusement 30 à 70 % et mieux encore 40 à 60 %.

6. Composition selon l'une des revendications 1 à 5, **caractérisée en ce qu'elle** contient un lignosulfonate d'ammonnium et au moins un composé choisi parmi les composés contenant du phosphore et le sulfate d'ammonium.

7. Composition selon la revendication 6, **caractérisée en ce que** le composé contenant du phosphore et le sulfate d'ammonium sont présents en une quantité au plus égale à 20 parts en poids pour 100 parts en poids de lignosulfonate d'ammonium et de composé carbonylé de formule (I), de préférence au plus 15 parts et avantageusement au plus 10 parts.

8. Composition selon l'une des revendications 1 à 7, **caractérisée en ce qu'elle** comprend en outre les additifs conventionnels ci-après dans les proportions suivantes calculées sur la base de 100 parts en poids de lignosulfonate d'ammonium ou de sel de métal alcalin ou alcalino-terreux d'acide lignosulfonique et de composé carbonylé de formule (I) :
- 0 à 5 parts de silane, en particulier un aminosilane,
- 0 à 20 parts d'huile, de préférence 4 à 15 parts,
- 0 à 30 parts de glycérol, de préférence 0 à 20 parts,
- 0 à 5 parts d'un silicone,
- 0 à 40 parts d'un phosphate organique, de préférence 0 à 30 parts.
- 0 à 20 parts d'un extendeur, en particulier des hydrates de carbone tels qu'une mélasse ou une dextrine, et des protéines animales ou végétales, notamment de soja.

9. Composition selon l'une des revendications 1 à 8, **caractérisée en ce qu'elle** contient un lignosulfonate d'ammonium et de l'urée.

10. Composition selon la revendication 9, **caractérisée en ce que** la quantité d'urée représente jusqu'à 30 parts en poids pour 100 parts en poids de lignosulfonate d'ammonium et de composé carbonylé de formule (I), de préférence jusqu'à 20 parts.
